# EUROPÄISCHE PATENTSCHRIFT

(11) **EP 2 273 162 B1**
(45) Veröffentlichungstag und Bekanntmachung des Hinweises auf die Patenterteilung: **09.01.2019**
(21) Anmeldenummer: 09008802.2
(22) Anmeldetag: 06.07.2009
(51) Int. Cl.: F16J 15/12, H01M 2/14, H01M 6/12, H01M 8/02

(54) **Dichtungsrahmen zur Verwendung in einer Batterie**
Sealing frame for use in a battery
Cadre d'étanchéité destiné à l'utilisation dans une batterie

(43) Veröffentlichungstag der Anmeldung: 12.01.2011
(73) Patentinhaber: Carl Freudenberg KG, 69469 Weinheim (DE)
(72) Erfinder: Kritzer, Peter, 67147 Forst (DE); Kramer, Thomas, 64668 Zotzenbach (DE); Zischka, Helmut, 71287 Weissach (DE)
(74) Vertreter: Banse & Steglich Patentanwälte PartmbB

(56) Entgegenhaltungen:
- EP-A- 0 339 364
- EP-A1- 2 366 200
- EP-A2- 2 416 439
- EP-A2- 2 432 045
- DE-A1-102008 041 475
- FR-A- 2 875 057
- JP-A- 9 055 217
- US-A- 5 521 024

## Beschreibung

### Technisches Gebiet

Die Erfindung betrifft die Verwendung eines Dichtungsrahmens in einer Batterie, umfassend einen Grundkörper, wobei der Grundkörper eine Öffnung umgreift, wobei der Grundkörper eine erste Dichtfläche und eine gegenüberliegende zweite Dichtfläche aufweist.

### Stand der Technik

Größere Batterien sind aus einzelnen Zellen aufgebaut. Üblicherweise enthält eine Batterie für Hybrid- bzw. Elektro-Fahrzeuge oder industrielle Anwendungen zwischen zwanzig und mehreren hundert einzelnen Zellen. Dabei können die einzelnen Zellen als Rundzellen, als prismatische Zellen oder sogenannte Coffee-Bag-Zellen ausgestaltet sein. Coffee-Bag-Zellen umfassen eine flexible, aus Folie aufgebaute Hülle, in der elektrischen Komponenten einer Zelle angeordnet sind.

Zur Realisierung einer optimalen Raumausnutzung in einer Batterie werden vor allem Coffee-Bag-Zellen verwendet. Diese zeichnen sich zudem durch ein geringes Gewicht bei hoher Kapazität aus. Coffee-Bag-Zellen sind über die thermisch leitfähigen Folien gut kühlbar. Des Weiteren sind Zellen dieser Bauart leicht skalierbar, da alle Komponenten der Zelle inklusive des Folien-Gehäuses in der Produktion leicht in der Größe variiert werden können.

Aufgrund hoher gespeicherter Energiemengen stellen größere Batterien stets ein Sicherheitsrisiko beim Auftreten von Fehlfunktionen dar. Dabei sind Lithium-Batterien als besonders kritisch anzusehen, da diese eine hohe Energiedichte, einen brennbaren Elektrolyten und dünne Separatoren aufweisen. Schließlich erzeugen Lithium-Batterien hohe Zell-Spannungen, so dass die in der Zelle angeordneten Komponenten hohen elektrochemischen Belastungen ausgesetzt sind. Dies ist besonders relevant bei Auto- und Industriebatterien, für die Lebensdauern von mindestens 8-10 Jahren angesetzt sind.

Die zuvor genannten Coffee-Bag-Zellen lassen sich platzsparend montieren. So können große Energiemengen pro Volumeneinheit in einer Batterie gespeichert werden. Hiermit sind allerdings wesentliche konstruktionsbedingte Nachteile verbunden. Durch die flexible Hülle verändert sich die Dimension von Coffee-Bag-Zellen, wenn diese geladen oder entladen werden. Dies ist auch mit einer Volumenausdehnung verbunden. Die Volumenausdehnung führt zu typischen Dickenänderungen einer einzelnen Zelle von etwa 5 % zwischen geladenem und ungeladenem Zustand.

Bei einem Zusammenbau eines sogenannten "Stacks", der aus vielen einzelnen, in Reihe geschalteten Zellen besteht, muss daher berücksichtigt werden, dass die einzelnen Zellen ein veränderliches Volumen zeigen. Insbesondere muss darauf geachtet werden, dass die Zellen im geladenen Zustand, bei welchem sie ihre größte Dicke annehmen, nahezu keine oder nur minimale Pressung auf die Flächen benachbarter Zellen ausüben. Dabei ist grundsätzlich auch zu berücksichtigen, dass die Dicke der flexiblen Zellen auch aufgrund der Fertigungstoleranzen nicht einheitlich ist, sondern Schwankungen unterworfen ist.

Des Weiteren besteht ein Bedarf nach einer Anordnung, durch welche Stöße oder Vibrationen abgefedert und/oder gedämpft werden, so dass das Innere der Batterie sowie Kontakte keinen Schaden nehmen. Des Weiteren müssen Anschlüsse der Leitungs- und Überwachungselektronik möglichst frei von mechanischen Belastungen mit der Batterie verbunden werden. Ein Loslösen schon eines der vielen hundert Kontakten der Leistungselektronik führt bei einer Reihenschaltung zum Ausfall der Batterie. Bei Ausfall eines Kontaktes der Überwachungselektronik kann die dann nicht mehr überwachte Zelle allmählich in einen kritischen Zustand gelangen, was mittelfristig zu einer Schädigung oder Ausfall der gesamten Batterie führen kann.

Die Kanten der zuvor genannten Coffee-Bag-Zellen weisen eine Siegelnaht auf. Diese Siegelnaht verbindet zwei Folien einer Zelle, welche dadurch im dem dadurch gebildeteten Hohlraum weitere Bauteile einschließen. Diese Folien sind dazu auf der Innenseite mit einem elektrisch isolierenden, haftvermittelnden Siegel-Thermoplast beschichtet. Dieses Siegel-Thermoplast kann aus einem funktionalisierten Polyolefin gebildet sein. Diese Siegelnaht stellt eine mechanische Schwachstelle einer Coffee-Bag-Zelle dar.

Des Weiteren kann der Luftdruck in der Umgebung der Zellen schwanken. Wenn das Gehäuse einer Batterie hermetisch dicht abgeschlossen ist, kann es zu temperaturbedingten Druckschwankungen von typischerweise 0,2 bar kommen. Diese Druckschwankungen belasten die Siegelnähte zusätzlich.

Die Siegelnaht stellt aber auch eine Sollbruchstelle dar, die bei einem Störfall der Batterie dem Elektrolyt erlauben soll, auszublasen. Hierdurch soll ein Platzen der Zelle vermieden werden. Wenn der austretende brennbare Elektrolyt in Kontakt mit Elektroden tritt, kann er sich entzünden und zu Bränden oder Explosionen führen. Die maximalen zulässigen Überdrücke im Inneren einer Coffee-Bag-Zelle liegen meist weit unterhalb von 0,1 MPa, um ein Öffnen der Siegelnaht zu verhindern. Besonders kritisch ist bei Coffee-Bag-Zellen die Durchführung der stromableitenden Elektroden anzusehen. Diese weisen meist eine Dicke von etwa 0,1 bis 0,3 mm auf. In diesem Bereich ist auch eine mögliche Leckage besonders kritisch, da sich austretender Elektrolyt an den Elektroden augenblicklich entzünden kann. Die Siegelnaht wird generell als Schwachstelle großer Zellen angesehen, da sie über Jahre hinweg ständigen, durch das Zyklisieren bedingte, Belastungen ausgesetzt ist. Schließlich werden für die Kühlung großer Batterien derzeit vorzugsweise wasserbasierte Kühlmedien oder, bei Verwendung von Klimaanlagen, fluorierte Kohlenwasserstoffe oder Kohlendioxid eingesetzt. Ein direkter Kontakt der meisten Kühlmedien mit dem Inneren der Zellen kann zu einer heftigen chemischen Reaktionen führen. Bei wasserbasierten Kühlmedien wird zum Beispiel Wasserstoff freigesetzt, der leicht entzündlich ist und zu Explosionen führen kann. Aus diesem Grund wird in der Technik in der Regel eine Kontaktkühlung angewandt, wobei der Wärmefluss zwischen Zelle und Kühlkreislauf über thermisch leitfähige Komponenten hergestellt wird und das Kühlmedium so nicht in direktem Kontakt mit den Zellen stehen kann.

### Darstellung der Erfindung

Der Erfindung liegt daher die Aufgabe zu Grunde, eine Batterie derart auszugestalten und weiterzubilden, dass diese im Normalbetrieb eine zuverlässige Dichtheit aufweist, bei Störfällen dem Elektrolyten aber erlaubt, problemlos und gerichtet zu entweichen.

Die vorliegende Erfindung löst die zuvor genannte Aufgabe durch Verwendungen und Batterien mit den Merkmalen der Patentansprüche. Danach ist ein Dichtungsrahmen der eingangs genannten Art dadurch gekennzeichnet, dass die erste Dichtfläche und/oder die zweite Dichtfläche elastisch komprimierbar ausgebildet ist.

Erfindungsgemäß ist erkannt worden, dass elastisch komprimierbare Dichtflächen eine Sollbruchstelle wie eine Siegelnaht dicht anliegend umgeben und übergreifen können. Durch einen derartigen Dichtungsrahmen sind die Zellen innerhalb einer Batterie einerseits mechanisch fixiert und können andererseits ihr Volumen im Sollbereich der Vorder- und Rückseite geringfügig ändern, ohne das es zu belastenden Spannungen kommt. Die elastisch komprimierbaren Dichtflächen gleichen eine geringfügige Volumenänderung der Zellen problemlos aus, so dass keine mechanischen Beanspruchungen auf die elektrischen Anschlüsse übertragen werden. Des Weiteren können elastisch komprimierbare Dichtflächen Vibrationen dämpfen und abfedern. Die Schwachstelle einer Zelle ist zusätzlich abgedichtet, da auf diese ein elastischer Anpressdruck wirkt. Hierdurch wird ein Austreten von Elektrolyten von innen nach außen stark unterdrückt. Des Weiteren werden von außen anstehende Kühlmedien, insbesondere Wasser, oder aus der Umgebung anstehende Feuchtigkeit vom Inneren der Batterie ferngehalten. Schließlich ist erkannt worden, dass in einer elastisch komprimierbaren Dichtfläche problemlos eine Sollausblasstelle im Dichtungsrahmen angebracht werden kann, welche im Störfall dem Elektrolyten einen Austritt von innen nach außen erlaubt. Der Elektrolyt wird hierdurch elektrodenfern abgeblasen und kann sich dadurch nicht an den Elektroden entzünden.

Im Sinne einer einfachen Fertigung kann der Grundkörper aus einem elastisch komprimierbaren Material gefertigt sein. Vor diesem Hintergrund ist konkret denkbar, dass der Grundkörper einstückig aus einem elastischen Material wie Silikon, Silikonkautschuk, SBR oder EPDM gefertigt ist. Da die Dichtung meist keinem direkten Medienkontakt ausgesetzt ist, sind auch andere Elastomere wie NBR denkbar. Die Verwendung von Silikon erlaubt eine zusätzliche Überlappung der Dichtung über die Elektroden. Bei Verwendung von kohlenstoffbasiertem Kautschuk kann in diesem Fall nicht immer ausgeschlossen werden, dass die hohen Spannungen in den Elektroden-Ableitern zu einer Carbonisierung der Elastomer-Oberfläche und damit zu einem Verlust der Isolierwirkung führen. Die Überlappung erlaubt es, die Elektroden mechanisch zu fixieren und unterstützt die Stabilität deren Kontaktierung.

Die erste Dichtfläche und/oder die zweite Dichtfläche können als elastisch komprimierbare Schicht oder als Dichtspur ausgebildet sein, die auf einem nicht-elastischen Tragkörper aufgebracht ist. Hierdurch kann ein sehr stabiler Dichtungsrahmen gefertigt werden, der dennoch an den kritischen Stellen, nämlich den Dichtflächen, elastisch komprimierbar ausgestaltet ist. Vor diesem Hintergrund ist konkret denkbar, dass der nicht-elastische Tragkörper sandwichartig zwischen zwei elastisch komprimierbaren Schichten eingeschlossen ist. Denkbar ist auch eine einseitige Aufbringung einer elastisch komprimierbaren Schicht auf den nicht-elastischen Tragkörper. Der nicht-elastische Tragkörper könnte aus einem thermoplastischen Kunststoff, einem Duroplasten oder einem Metall gefertigt sein. Die Vorteile eines thermoplastischen Kunststoffs sind sein geringes Gewicht und die geringen Kosten. Des Weiteren ist ein Kunststoff elektrisch nicht leitfähig. Metalle sind gut thermisch leitend und können daher zur Kühlung verwendet werden. Hierbei sollte das Metall besonders im Bereich der Elektroden-Ableitbleche vollständig von den elastisch komprimierbaren Schichten gekapselt aufgenommen sein. Durch Verwendung von thermisch leitfähigen Kunststoffen, beispielsweise einem Thermoplast enthaltend Kohlenstofffasern, kann die thermische Leitfähigkeit der Kunststoffe und damit deren Wärmeübertragung wesentlich verbessert werden. Schließlich ist denkbar, dass der Grundkörper als ein Zwei-Komponententeil spritzgusstechnisch gefertigt ist. Hierdurch ist eine schnelle Fertigung erzielbar. Die Dichtung könnte durch Vulkanisation, Aufspritzen, Einlegen oder Verkleben auf den Träger aufgebracht werden.

In der ersten Dichtfläche und/oder der zweiten Dichtfläche kann eine Vertiefung ausgebildet sein. Die Siegelnaht einer Coffee-Bag-Zelle kann durch die Vertiefung in Kontakt mit der Atmosphäre stehen. Vor diesem Hintergrund ist denkbar, dass in einer Dichtfläche oder in beiden Dichtflächen eine Vertiefung ausgebildet ist. Sofern zwei Dichtungsrahmen aneinanderliegen, ergänzen sich die Vertiefungen zu einer vergrößerten Ausnehmung, durch die die Siegelnaht einen Kontakt mit der Atmosphäre erhalten kann. Dabei kann die Aussparung im Querschnitt bogenförmig, halbkreisförmig oder rechteckig ausgebildet sein. Die bogenförmige, halbkreisförmige Ausgestaltung erlaubt eine Anlage an der Siegelnaht ohne Anpressung. Hierdurch wird eine Sollausblasstelle erzielt, durch die der Elektrolyt in die Umgebung abgeblasen werden kann. Die Vertiefung sollte von den Elektroden beabstandet angeordnet sein. Anstelle der Vertiefung könnte es denkbar sein, in einem lokalen Bereich eine Dichtung mit geringem Anpressdruck auf die Siegelnaht zu realisieren. Dies kann durch ein lokal aufgebrachten elastomeren Werkstoff erfolgen der eine höhere Elastizität als der elastomere Werkstoff der Dichtflächen realisiert werden. Hierdurch ist gewährleistet, dass unter normalen Prozessbedingungen ein Eindringen von Feuchtigkeit von außen am die Siegelnaht verhindert wird. Bei einem Störfall, bei dem das Ablassen des Elektrolyten notwendig wird, reicht dessen Überdruck aus, die lokal geschwächte Dichtung aufzuweiten. Eine solche gewünschte Schwachstelle könnte beispielsweise durch ein weicheres Elastomer, einen lokal geringeren Anpressdruck oder durch eine lokal unterschiedliche Anordnung erreicht werden. Alternativ könnte sie durch eine dünne Folie abgedeckt sein.

In der Öffnung des Dichtungsrahmens können Stege vorgesehen sein, welche eine Dicke aufweisen, die geringer ist als die Dicke des Grundkörpers. Die Stege erlauben eine federnde Beabstandung der verdickten, bauchigen Bereiche der Zellgehäuse der Zellen.

Der Grundkörper kann Bohrungen aufweisen. Durch Bohrungen können verschiedene nebeneinander angeordnete Dichtungsrahmen miteinander verbunden werden. Vor diesem Hintergrund ist auch denkbar, dass zwei Dichtungsrahmen im Sinne einer Nut-Federverbindung miteinander verbunden werden. Hierbei ist konkret denkbar, dass in einem Grundkörper Sacklöcher oder Bohrungen angeordnet sind, die Zapfen eines weiteren Dichtungsrahmens aufnehmen.

Die Bohrungen können in Laschen ausgebildet sein, die vom Grundkörper abragen. Die Laschen erlauben einerseits, den Dichtungsrahmen problemlos zu ergreifen und andererseits, die Dichtflächen nicht durch Bohrungen zu schwächen oder zu vermindern. Zudem erlauben sie eine streng parallele Anordnung der nebeneinander angeordneten Zellen.

Der Grundkörper kann mit einem Klebstoff versehen sein. Vor diesem Hintergrund ist konkret denkbar, dass ein Klebeband auf dem Grundkörper angeordnet ist. Durch einen Klebstoff oder ein Klebeband können zwei Dichtungsrahmen miteinander verklebt oder der Dichtungsrahmen auf die Siegelnaht geklebt werden. Hierdurch ist ein rascher und prozesssicherer Aufbau von Stacks ermöglicht.

In den Dichtungsrahmen kann eine Kühleinrichtung integriert sein. Hierdurch können die Dichtungsrahmen in größeren Batterien verwendet werden, bei denen eine Kühlung der Zellen erforderlich ist. Vor diesem Hintergrund ist denkbar, dass die Kühleinrichtung als Metallkörper ausgebildet ist, der zwischen zwei elastisch komprimierbaren Schichten sandwichartig aufgenommen ist. Die elastische Dichtung der Siegelnaht könnte in anderen Bereichen dann für eine zusätzliche Abdichtung des Kühlkreislaufes verwendet werden, wobei die Wärmeübertragung von den Zellen auf die Kühleinrichtung vorzugsweise über die Siegelnähte erfolgt, die an den Metallkörpern anliegen. Dabei sollte der Metallkörper, insbesondere im Bereich der Elektroden-Ableitbleche gekapselt aufgenommen und vollständig von den Schichten umschlossen sein. Andere Ausgestaltungen der Kühleinrichtung umfassen einen besonders gut wärmeleitenden Lack, einen wärmeleitenden Thermoplast oder ein wärmeleitendes Elastomer. Die Kühleinrichtung könnte thermisch leitende Elastomere umfassen, die mit einem äußeren Kühlkreislauf oder Kühlrippen in Kontakt stehen. Dieser Ausgestaltung stellt eine passive Kühlung dar. Bei einer aktiven Kühlung könnten in oder zwischen den elastischen Dichtungsrahmen Kühlkanäle angebracht sein, durch die ein Kühlmedium strömt. Dabei kann das Kühlmedium durch mehrere zu einem Stack verbundene Dichtungsrahmen strömen und so mehrere Zellen temperieren. Hierdurch sind die Zellen zuverlässig kühlbar und homogen temperierbar.

Die Batterie umfasst mindestens zwei Dichtungsrahmen der hier beschriebenen Art und mindestens eine Zelle, wobei die Zelle zwischen den zwei Dichtungsrahmen positioniert ist, wobei die Zelle einen verdickten Bereich aufweist, der sich in die Öffnungen der Grundkörper erstreckt und wobei die Zelle einen verjüngten Bereich aufweist, an welchem die Dichtungsflächen dichtend anliegen. Der verjüngte Bereich entspricht der Siegelnaht. Durch eine solche Anordnung von Zellen können deren Sollbruchstellen, die sich am verjüngten Bereich befinden, sandwichartig von zwei Dichtungsrahmen umgeben werden. Ein derartige erfindungsgemäße Batterie eignet sich für mobile Anwendungen, insbesondere in Fahrzeugen und Flugzeugen sowie für stationäre Anwendungen, beispielsweise für Systeme die eine unterbrechungsfreie Stromversorgung erfordern.

Vor diesem Hintergrund können die Dichtungsflächen den verjüngten Bereich zumindest bereichsweise sandwichartig zwischen sich aufnehmen und aneinander dichtend anliegen. Konkret ist denkbar, dass die Dichtungsflächen den verjüngten Bereich in einer der Öffnung zugewandten Zone sandwichartig umschließen und in einer Zone, welche der Öffnung abgewandt ist, direkt aneinander liegen. In der oberen Zone, die der Öffnung abgewandt ist, liegen die Dichtungsflächen dichtend aneinander und dichten das Innere der Zellen gegen schädliche Medien ab.

Zwischen den Dichtungsrahmen können Ableitbleche der Elektroden der Zellen aufgenommen sein, welche über die Dichtungsrahmen hinausragen. Die Dichtungsrahmen liegen dicht an den Ableitblechen an, so dass keine schädlichen Medien von außen nach innen oder von innen nach außen treten können. Die Ableitbleche ragen dabei über die Dichtungsrahmen hinaus, so dass sie problemlos kontaktiert werden können.

Zwischen den Dichtungsrahmen kann mindestens ein Sensor angeordnet sein, welcher Drücke erfasst. Durch einen solchen Sensor, insbesondere einen Drucksensor können sich aufblasende Zellen problemlos detektiert werden. Sich stark aufblasende Zellen stellen ein typisches Phänomen für schadhafte Zellen dar.

Die Zellen sind als Coffee-Bag-Zellen mit einer Siegelnaht ausgestaltet, wobei der verjüngte Bereich der Zellen als Siegelnaht ausgestaltet sein kann. Coffee-Bag-Zellen zeichnen sich durch eine hohe Kapazität pro Bauvolumen aus. Konkret weisen Coffee-Bag-Zellen ein flexibles Zellgehäuse auf. Vielmehr ist das Zellgehäuse eine Folie, in welche das Innere der Zellen analog zum Kaffee in einer Kaffeepackung eingeschweißt ist. Diese Folie kann als Metallfolie ausgestaltet sein, welche beidseitig beschichtet ist. Diese Technik ermöglicht die Herstellung dünnerer Zellen und eine größere Designflexibilität. Weitere Vorteile sind eine höhere Energiedichte, die durch den kompakten Aufbau bewirkt wird, und niedrigere Herstellungskosten. Die Flexibilität des Designs macht die Zellen besonders attraktiv für den Mobiltelefon- und Computermarkt.

Vor diesem Hintergrund ist die Zelle als Lithium-Ionen-Zelle ausgestaltet. Darüber hinaus könnte die Zelle als Lithium-Polymer-Zelle ausgestaltet sein, bei der an Stelle eines flüssigen Elektrolyten eine Polymermatrix verwendet wird, die den Elektrolyten nahezu vollständig aufsaugt und nahezu auslaufsicher fixiert.

An der Batterie kann eine Abblashaube angeordnet sein. Hierdurch kann sichergestellt werden, dass abgeblasene Gase oder Elektrolyten sicher abgeleitet werden. Die Abblashaube kann aus Metall, Kunststoff oder einem Elastomer bestehen und muss gegenüber den Dichtungsrahmen abgedichtet sein. Die Abblashaube kann dabei mehrere nebeneinander angeordnete Vertiefungen überdecken. Gegebenenfalls könnte die Abblashaube mit einer Folie beziehungsweise einer Berstmembran ausgestattet sein, so dass sie unter Normalbedingungen Feuchtigkeit von der Siegelnaht der Coffee-Bag-Zellen fernhält. Die Abblashaube kann dann beispielsweise über einen Schlauch oder ein Rohr mit der Umgebung in Verbindung stehen. In diesen Schlauch oder in das Rohr kann zusätzlich ein Ventil eingebracht sein, welches nur bei anstehendem Überdruck von innen öffnet. Mit dieser Anordnung wäre sicher gestellt, dass bei Abblasen des Elektrolyten im Störfall der Batterie dieser sicher und gezielt aus dem Inneren der Batterie, insbesondere weg von den Elektroden abgeführt wird.

Die Batterie kann einen weiteren festen Fixierrahmen aufweisen. Der weitere feste Fixierrahmen könnte aus Kunststoff oder aus Metallen gefertigt sein, die mit nicht leitenden Materialien beschichtet sein können. Dieser feste Rahmen stellt zusätzlich sicher, dass auf die Dichtstellen ein konstanter und gleichmäßiger Anpressdruck erfolgt. Zudem ermöglicht der feste Rahmen eine verbesserte und sichere Montage des Stacks der mit den Dichtungsrahmen ausgestatteten Zellen im Gehäuse der Batterie. Zudem erleichtert eine solche Anordnung die Wartung und den Austausch schadhafter Zellen.

### Kurzbeschreibung der Zeichnung

Einige Ausführungsbeispiele des erfindungsgemäß verwendbaren Dichtungsrahmens werden nachfolgend anhand der Figuren näher erläutert. Diese zeigen, jeweils schematisch:
- Fig. 1: eine perspektivische Ansicht eines rechteckigen Dichtungsrahmens;
- Fig. 2: eine perspektivische Ansicht zweier aneinander anliegender Dichtungsrahmen;
- Fig. 3: eine Seitenansicht zweier aneinander anliegender Dichtungsrahmen;
- Fig. 4: einen Dichtungsrahmen, der einen starren Tragkörper umfasst, auf dem einseitig eine elastisch komprimierbare Schicht aufgebracht ist;
- Fig. 5: einen Dichtungsrahmen, bei welchem auf einem starren Tragkörper beidseitig elastisch komprimierbare Schichten aufgebracht sind;
- Fig. 6: einen Dichtungsrahmen, bei welchem die Öffnung durch Stege unterteilt ist, welche eine Dicke aufweisen, die geringer ist als die Dicke des Grundkörpers;
- Fig. 7: links eine Draufsicht auf eine Coffee-Bag-Zelle, aus welcher Elektroden herausragen, und rechts eine Seitenansicht der Coffee-Bag-Zelle;
- Fig. 8: eine schematische Ansicht eines Stacks von einzelnen Coffee-Bag-Zellen, zwischen denen Dichtungsrahmen angeordnet sind, wobei die Dichtungsrahmen von einem Fixierrahmen formschlüssig aneinander gepresst werden, und
- Fig. 9: zwei aneinander liegende Dichtungsrahmen mit im Querschnitt bogenförmig ausgestalteten Vertiefungen sowie eine schematische Ansicht einer Abblashaube, die über den Vertiefungen angebracht ist und mit den Dichtungsrahmen formschlüssig verbunden ist;
- Fig. 10: einen Dichtungsrahmen mit einer integrierten Kühleinrichtung.

### Ausführung der Erfindung

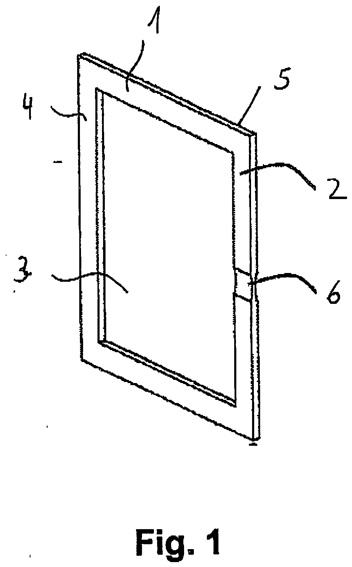

Figur 1 zeigt einen Dichtungsrahmen 1 zur Verwendung in einer Batterie, umfassend einen Grundkörper 2, wobei der Grundkörper 2 eine Öffnung 3 umgreift, wobei der Grundkörper 2 eine erste Dichtfläche 4 und eine gegenüberliegende zweite Dichtfläche 5 aufweist. Die erste Dichtfläche 4 und die zweite Dichtfläche 5 sind elastisch komprimierbar ausgebildet. Der Grundkörper 2 ist rechteckig ausgestaltet und weist vier Schenkel auf, welche die Öffnung 3 zusammenhängend umgeben. Die erste Dichtfläche 4 ist parallel zur zweiten Dichtfläche 5 orientiert, wobei beide Dichtflächen 4, 5 mit der Öffnung 3 fluchten.

Der Grundkörper 2 ist aus einem elastisch komprimierbaren Material gefertigt. In der ersten Dichtfläche 4 und der zweiten Dichtfläche 5 ist jeweils eine Vertiefung 6 ausgebildet, die im Querschnitt bogenförmig ausgebildet ist.

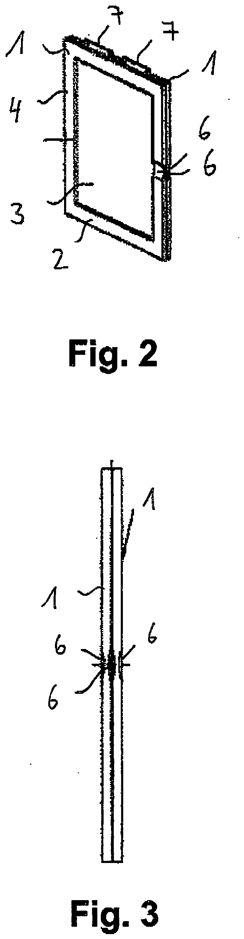

Figur 2 zeigt zwei gemäß Figur 1 gestaltete Dichtungsrahmen 1, die aneinanderliegend angeordnet sind in einer perspektivischen Ansicht. Vom Grundkörper 2 ragen Laschen 7 ab, in denen Bohrungen angeordnet sein können. Durch die Bohrungen können die Dichtungsrahmen 1 mit Hilfe von Schrauben miteinander fixiert werden. Hierdurch kann ein konstanter und genügend hoher Anpressdruck über die gesamten Grundkörper 2 der Dichtungsrahmen 1 sichergestellt werden.

Figur 3 zeigt eine zweite Ansicht zweier aneinander liegender Dichtungsrahmen 1 gemäß Figur 2, wobei sich zwei bogenförmige Vertiefungen 6 zu einer Sollausblasstelle für einen Elektrolyten ergänzen.

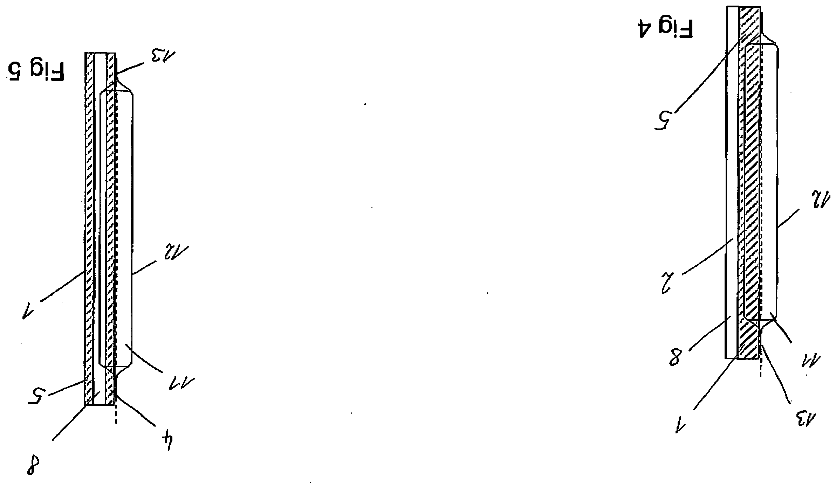

Figur 4 zeigt einen Dichtungsrahmen 1 mit einem Grundkörper 2, bei welchem die zweite Dichtfläche 5 als elastisch komprimierbare Schicht ausgebildet ist, die auf einem nicht elastischen Tragkörper 8 aufgebracht ist.

Figur 5 zeigt einen Dichtungsrahmen 1, bei welchem die erste Dichtfläche 4 und die zweite Dichtfläche 5 jeweils als elastisch komprimierbare Schichten ausgebildet sind. Die Schichten sind beidseitig auf einem nicht elastischen Tragkörper 8 aufgebracht. Der Tragkörper 8 wird sandwichartig von den komprimierbaren Schichten eingeschlossen.

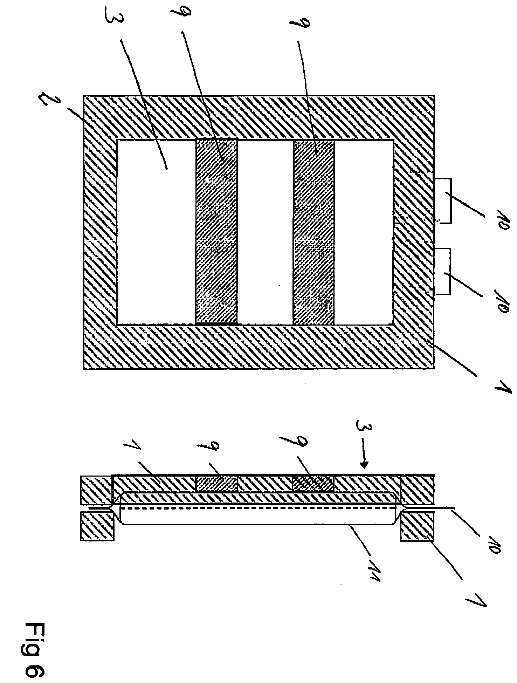

Figur 6 zeigt einen Dichtungsrahmen 1 mit einem Grundkörper 2, bei welchem die Öffnung 3 durch Stege 9 unterteilt ist, welche eine Dicke aufweisen, die geringer ist als die Dicke des Grundkörpers 2. Die Stege 9 verhindern, dass sich direkt benachbarte Zellen 11 berühren.

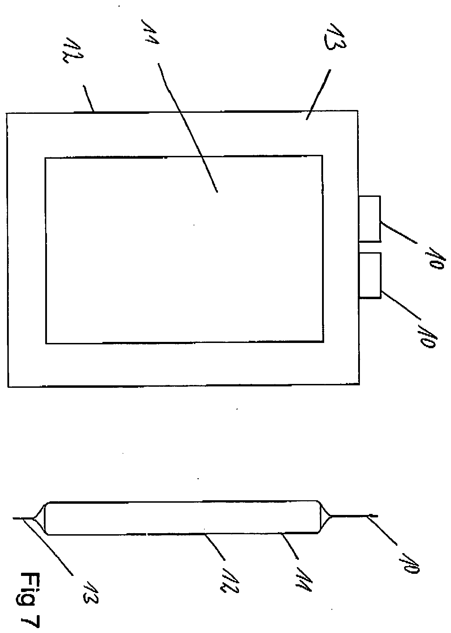

Figur 7 zeigt eine Zelle 11, welche als Coffee-Bag-Zelle ausgestaltet ist. Links in Figur 7 ist eine Draufsicht der Zelle 11 gezeigt. Das innere der Zelle 11, nämlich der Elektroden/Separatorstapel, befindet sich im Zellgehäuse 12, welches aus einem beschichteten Metall besteht. Ganz konkret wird Aluminium mit einer Polyolefin-Beschichtung versehen. Typische Breiten und Längen des Zellgehäuses 12 von Zellen 11, die in Elektrofahrzeugen verwendet werden, betragen typischerweise mehr als 20 cm. Solche Zellgehäuse 12 und sind etwa 1 cm dick. Das Zellgehäuse 12 weist eine umlaufende circa 1 cm breite Siegelnaht 13 auf, an welcher zwei beschichtete Metalle, nämlich die Folien, dicht zusammen laminiert sind. Die typische Dicke der Siegelnaht 13 beträgt etwa 1 bis 2 mm. Aus der Siegelnaht 13 ragen die Ableitbleche 10 der Elektroden heraus. Die Ableitbleche 10 sind aus Metall und sind üblicherweise weniger als 1 mm dick. Rechts in Figur 7 ist eine Seitenansicht der Zelle 11 gezeigt.

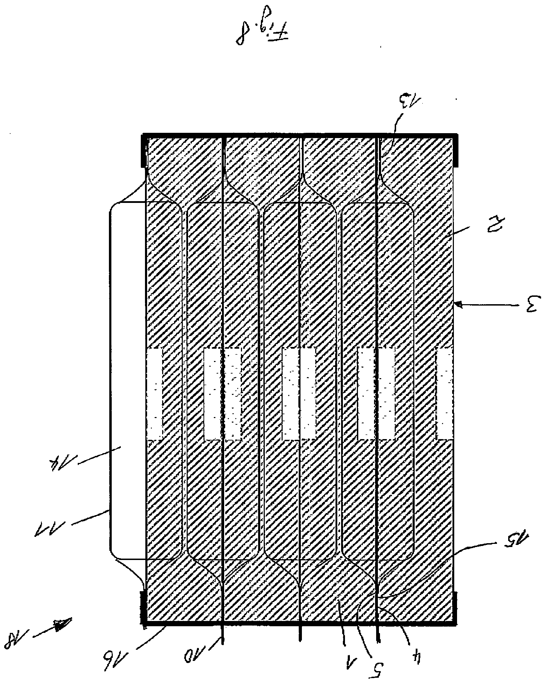

Figur 8 zeigt einen Stack mehrerer Zellen 11, welche im Bereich der Siegelnaht 13 voneinander beabstandet sind. Die Siegelnähte 13 werden durch die Dichtungsrahmen 1 verpresst. Dabei umgibt ein Dichtungsrahmen 1 die Zelle 11 umfänglich. Die Ableitbleche 10 der Elektroden stehen aus den Dichtungsrahmen 1 heraus. Die Dichtungsrahmen 1 ragen über die Siegelnähte 13 heraus. Hierdurch ist eine Versiegelung gegen Feuchtigkeit aus der Atmosphäre gegeben, da zwei benachbarte Dichtungsrahmen 1 in der über die Siegelnähte 13 herausragenden Zone unmittelbar aneinanderliegen. Denkbar ist auch, dass die Dichtungsrahmen 1 miteinander formschlüssig verkrallt sind. Vorzugsweise sind zwischen benachbarten Zellen 11 Pufferabstände ausgebildet, die ausreichend durch die Dichtungsrahmen 1 abgedeckt sind. Hierdurch kann sichergestellt werden, dass bei auftretender maximaler Dicke der Zellen 11 kein zusätzlicher Druck auf die Siegelnähte 13 entsteht.

Diese Figur zeigt konkret auch eine Batterie 18, umfassend mindestens zwei Dichtungsrahmen 1 und mindestens eine Zelle 11, wobei eine Zelle 11 zwischen zwei Dichtungsrahmen 1 positioniert ist, wobei die Zelle 11 einen verdickten Bereich 14 aufweist, der sich in die Öffnungen 3 der Grundkörper der Dichtungsrahmen 1 erstreckt, und wobei die Zelle 11 einen verjüngten Bereich 15 aufweist, an welchen die Dichtungsflächen 4, 5 dichtend anliegen. Die Dichtungsflächen 4, 5 nehmen den verjüngten Bereich 15 bereichsweise sandwichartig zwischen sich auf und liegen darüber hinaus aneinander dichtend an. Der verjüngte Bereich 15 ist als Siegelnaht 13 ausgebildet. Der verdickte Bereich 14 umschließt das Innere der Zelle 11, nämlich den Elektroden/Separatorstapel. Zwischen den Dichtungsrahmen 1 sind Ableitbleche 10 der Elektroden der Zellen 11 aufgenommen, welche über die Dichtungsrahmen 1 hinausragen. Die Dichtungsrahmen 1 werden durch einen Fixierrahmen 16 platziert, welcher die Dichtungselemente 1 aneinander presst. Hierbei ist sicherzustellen, dass die Flächenpressung auf die Dichtungsrahmen 1 etwa konstant ist.

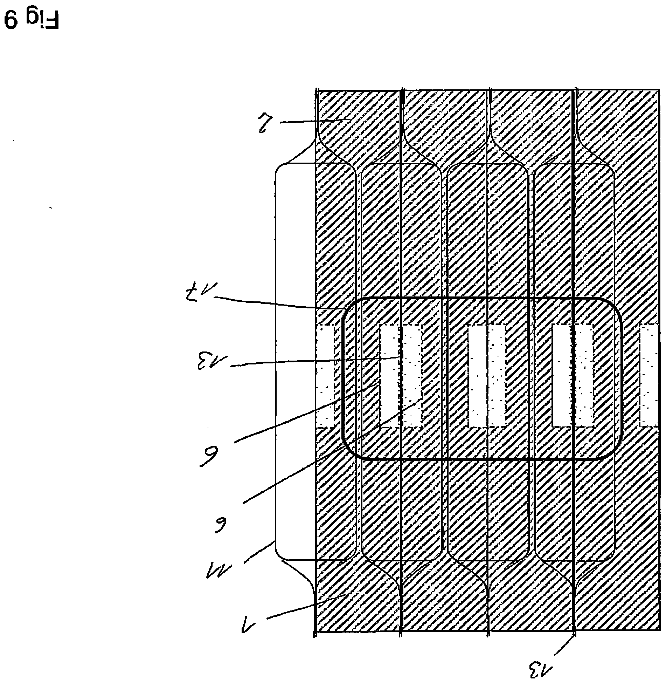

Figur 9 zeigt zwei aneinanderliegende Dichtungsrahmen 1, deren Vertiefungen 6 sich zu einer Sollausblasstelle ergänzen. Die Siegelnaht 13 hat hierbei Kontakt zur Atmosphäre. Zwei bogenförmige Vertiefungen 6 ergänzen sich zu einem ganzen Loch. Hierdurch wird eine Sollausblasstelle erzielt, die nicht an der Siegelnaht 13 pressend anliegt und dadurch einem austretenden Elektrolyten einen Weg nach außen offen lässt. Die Vertiefungen 6 sollten möglichst weit entfernt von den Ableitblechen 10 der Elektroden angeordnet sein. Über den Vertiefungen 6 der Dichtungsrahmen 1 ist eine Abblashaube 17 angeordnet, die mit dem Dichtungsrahmen 1 einen Formschluss eingeht. Die Abblashaube 17 erlaubt einen sicheren Abtransport von aus den Vertiefungen 6 emittierten Elektrolytgase.

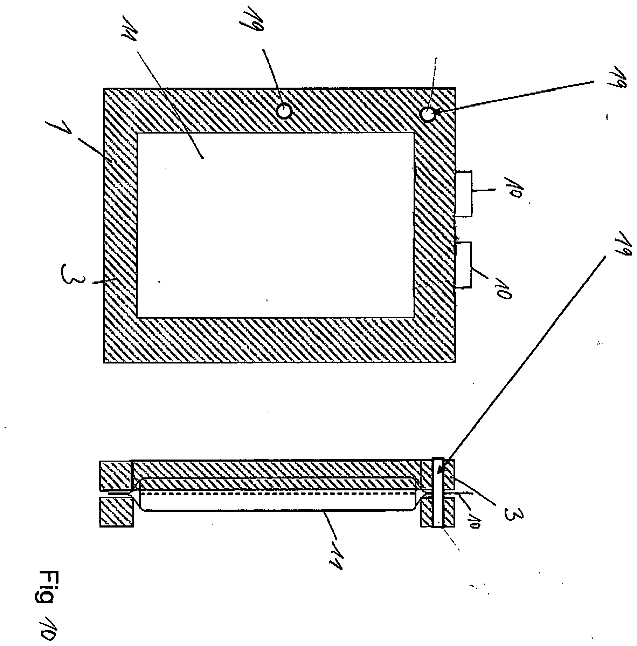

Figur 10 zeigt einen Dichtungsrahmen gemäß Figur 1, wobei in den Grundkörper 2 eine Kühleinrichtung 19, in dieser Ausgestaltung rohrförmige Kühlkanäle integriert sind. Der Dichtungsrahmen 1 ist in dieser Ausgestaltung thermisch leitfähig ausgestaltet. Ein Sandwich-Aufbau, wie in den Figuren 4 und 5 beschrieben, ist auch hier denkbar.

## Patentansprüche

1. Verwendung eines Dichtungsrahmens (1) umfassend einen Grundkörper (2), wobei der Grundkörper (2) eine Öffnung (3) umgreift, wobei der Grundkörper (2) eine erste Dichtfläche (4) und eine gegenüberliegende zweite Dichtfläche (5) aufweist, wobei die erste Dichtfläche (4) und/ oder die zweite Dichtfläche (5) elastisch komprimierbar ausgebildet ist, zum Dichten einer Batterie mit mindestens einer Zelle (11), die als Coffee-Bag-Zelle mit einer Siegelnaht (13) ausgestaltet ist, **dadurch gekennzeichnet, dass** der Dichtungsrahmen mindestens eines der Merkmale (a) bis (g) aufweist:
(a) der Grundkörper (2) ist aus einem elastisch komprimierbaren Material gefertigt,
(b) in der ersten Dichtfläche (4) und/oder der zweiten Dichtfläche (5) ist eine Vertiefung (6) ausgebildet,
(c) in der ersten Dichtfläche (4) und/oder der zweiten Dichtfläche (5) ist ein lokaler Bereich höherer Elastizität vorgesehen,
(d) in der Öffnung (3) sind Stege (9) vorgesehen, welche eine Dicke aufweisen, die geringer ist als die Dicke des Grundkörpers (2),
(e) der Grundkörper (2) weist Bohrungen auf, die in Laschen (7) ausgebildet sind, die vom Grundkörper (2) abragen,
(f) der Grundkörper (2) ist mit einem Klebstoff versehen,
(g) in den Dichtungsrahmen (1) ist eine Kühleinrichtung 19 integriert.

2. Batterie (18), umfassend
mindestens zwei Dichtungsrahmen (1) umfassend einen Grundkörper (2), wobei der Grundkörper (2) eine Öffnung (3) umgreift, wobei der Grundkörper (2) eine erste Dichtfläche (4) und eine gegenüberliegende zweite Dichtfläche (5) aufweist, wobei die erste Dichtfläche (4) und/ oder die zweite Dichtfläche (5) elastisch komprimierbar ausgebildet ist,
und mindestens eine Zelle (11), wobei die Zelle (11) zwischen den zwei Dichtungsrahmen (1) positioniert ist, wobei die Zelle (11) einen verdickten Bereich (14) aufweist, der sich in die Öffnungen (3) der Grundkörper (2) erstreckt und wobei die Zelle (11) einen verjüngten Bereich (15) aufweist, an welchem die Dichtungsflächen (4, 5) dichtend anliegen, wobei die Zellen (11) als Coffee-Bag-Zellen mit einer Siegelnaht (13) ausgestaltet sind,
**dadurch gekennzeichnet, dass** die Batterie mindestens eines der Merkmale (a) bis (j) aufweist:
(a) der Grundkörper (2) ist aus einem elastisch komprimierbaren Material gefertigt,
(b) in der ersten Dichtfläche (4) und/oder der zweiten Dichtfläche (5) ist eine Vertiefung (6) ausgebildet,
(c) in der ersten Dichtfläche (4) und/oder der zweiten Dichtfläche (5) ist ein lokaler Bereich höherer Elastizität vorgesehen,
(d) in der Öffnung (3) sind Stege (9) vorgesehen, welche eine Dicke aufweisen, die geringer ist als die Dicke des Grundkörpers (2),
(e) der Grundkörper (2) weist Bohrungen auf, die in Laschen (7) ausgebildet sind, die vom Grundkörper (2) abragen,
(f) der Grundkörper (2) ist mit einem Klebstoff versehen,
(g) in den Dichtungsrahmen (1) ist eine Kühleinrichtung 19 integriert.

3. Batterie (18) gemäß Anspruch 2, die mindestens eines der Merkmale (h) bis (j) aufweist:
(h) die Dichtungsflächen (4, 5) nehmen den verjüngten Bereich (15) zumindest bereichsweise sandwichartig zwischen sich auf und liegen aneinander dichtend an,
(i) zwischen den Dichtungsrahmen (1) ist mindestens ein Sensor angeordnet, welcher Drücke erfasst,
(j) an der Batterie (18) ist eine Abblashaube (17) angeordnet.

## Claims

1. Use of a sealing frame (1) comprising a base body (2), wherein the base body (2) encompasses an opening (3), wherein the base body (2) has a first sealing face (4) and an opposite second sealing face (5), wherein the first sealing face (4) and/or the second sealing face (5) is formed in an elastically compressible manner, for sealing a battery having at least one cell (11) which is formed as a coffee bag cell having a seal seam (13), **characterized in that** the sealing frame has at least one of features (a) to (g):
(a) the base body (2) is made from an elastically compressible material,
(b) a recess (6) is formed in the first sealing face (4) and/or the second sealing face (5),
(c) a local area of higher elasticity is provided in the first sealing face (4) and/or the second sealing face (5),
(d) bars (9) having a thickness lower than the thickness of the base body (2) are provided in the opening (3),
(e) the base body (2) has borings which are formed in flaps (7) which protrude from the base body (2),
(f) the base body (2) is provided with an adhesive,
(g) a cooling device (19) is integrated into the sealing frame (1).

2. Battery (18), comprising
at least two sealing frames (1) comprising a base body (2), wherein the base body (2) encompasses an opening (3), wherein the base body (2) has a first sealing face (4) and an opposite second sealing face (5), wherein the first sealing face (4) and/or the second sealing face (5) is formed in an elastically compressible manner,
and at least one cell (11), wherein the cell (11) is positioned between the two sealing frames (1), wherein the cell (11) has a thickened area (14) which extends into the openings (3) of the base body (2), and wherein the cell (11) has a tapered area (15), to which the sealing faces (4, 5) abut in a sealing manner, wherein the cells (11) are formed as coffee bag cells having a seal seam (13),
**characterized in that** the battery has at least one of features (a) to (j):
(a) the base body (2) is made from an elastically compressible material,
(b) a recess (6) is formed in the first sealing face (4) and/or the second sealing face (5),
(c) a local area of higher elasticity is provided in the first sealing face (4) and/or the second sealing face (5),
(d) bars (9) having a thickness lower than the thickness of the base body (2) are provided in the opening (3);
(e) the base body (2) has borings which are formed in flaps (7) which protrude from the base body (2),
(f) the base body (2) is provided with an adhesive,
(g) a cooling device (19) is integrated into the sealing frame (1).

3. Battery (18) according to claim 2 which has at least one of features (h) to (j):
(h) the sealing faces (4, 5) incorporate the tapered area (15) at least in certain areas between them in a sandwiched manner and abut each other in a sealing manner,
(i) at least one sensor sensing pressures is arranged between the sealing frames (1),
(j) a blow off cap (17) is arranged on the battery (18).

## Revendications

1. Utilisation d'un cadre d'étanchéité (1) comprenant un corps de base (2), le corps de base (2) entourant une ouverture (3), le corps de base (2) comportant une première surface d'étanchéité (4) et une deuxième surface d'étanchéité (5) en vis-à-vis, la première surface d'étanchéité (4) et/ou la deuxième surface d'étanchéité (5) étant conçue(s) en étant élastiquement compressible(s), pour assurer l'étanchéité d'une batterie pourvue d'au moins une cellule (11), qui est conçue sous la forme d'une cellule en dosette de café, avec une soudure (13), **caractérisée en ce que** le cadre d'étanchéité présente au moins l'une des caractéristiques (a) à (g) :
(a) le corps de base (2) est fabriqué en une matière élastiquement compressible,
(b) dans la première surface d'étanchéité (4) et/ou dans la deuxième surface d'étanchéité (5) est formé un creux (6),
(c) dans la première surface d'étanchéité (4) et/ou dans la deuxième surface d'étanchéité (5) est prévue une zone locale d'élasticité plus importante,
(d) dans l'ouverture (3) sont prévus des listels (9) qui présentent une épaisseur qui est inférieure à l'épaisseur du corps de base (2),
(e) le corps de base (2) comporte des perçages qui sont ménagés dans des pattes (7) qui saillissent à partir du corps de base (2),
(f) le corps de base (2) est pourvu d'un agent adhésif,
(g) dans le cadre d'étanchéité (1) est intégré un système de refroidissement (19).

2. Batterie (18), comprenant
au moins deux cadres d'étanchéité (1) comportant un corps de base (2), le corps de base (2) entourant une ouverture (3), le corps de base (2) comportant une première surface d'étanchéité (4) et une deuxième surface d'étanchéité (5) en vis-à-vis, la première surface d'étanchéité (4) et/ou la deuxième surface d'étanchéité (5) étant conçue(s) en étant élastiquement compressible(s),
et au moins une cellule (11), la cellule (11) étant positionnée entre les deux cadres d'étanchéité (1), la cellule (11) comportant une zone (14) en surépaisseur, qui s'étend dans les ouvertures (3) du corps de base (2) et la cellule (11) comportant une zone rétrécie (15), contre laquelle les surfaces d'étanchéité (4, 5) sont posées de manière à assurer l'étanchéité, les cellules (11) étant conçues sous la forme de cellules en dosettes à café, avec une soudure (13), **caractérisée en ce que** la batterie présente au moins l'une des caractéristiques (a) à (j):
(a) le corps de base (2) est fabriqué en une matière élastiquement compressible,
(b) dans la première surface d'étanchéité (4) et/ou dans la deuxième surface d'étanchéité (5) est formé un creux (6),
(c) dans la première surface d'étanchéité (4) et/ou dans la deuxième surface d'étanchéité (5) est prévue une zone locale d'élasticité plus importante,
(d) dans l'ouverture (3) sont prévus des listels (9) qui présentent une épaisseur qui est inférieure à l'épaisseur du corps de base (2),
(e) le corps de base (2) comporte des perçages qui sont ménagés dans des pattes (7) qui saillissent à partir du corps de base (2),
(f) le corps de base (2) est pourvu d'un agent adhésif,
(g) dans le cadre d'étanchéité (1) est intégré un système de refroidissement (19).

3. Batterie (18) selon la revendication 2, qui présente au moins l'une des caractéristiques (h) à (j) :
(h) les surfaces d'étanchéité (4, 5) accueillent à la manière d'un sandwich, au moins par endroits la zone rétrécie (15) et sont posées l'une contre l'autre de manière à assurer l'étanchéité,
(i) entre les cadres d'étanchéité (1) est placé au moins un capteur, lequel détecte des pressions,
(j) sur la batterie (18) est placé un capot de soufflage (17).
